# FASCICULE DE BREVET EUROPEEN

(11) **EP 2 880 585 B1**
(45) Date de publication et mention de la délivrance du brevet: **01.11.2017**
(21) Numéro de dépôt: 13744539.1
(22) Date de dépôt: 31.07.2013
(51) Int. Cl.: H04L 29/06, H04L 29/08, G06F 21/31, G06F 21/32, G06F 21/41

(54) **AUTHENTIFICATION DE PERSONNE PAR BIOMÉTRIE**
BIOMETRISCHE AUTHENTIFIZIERUNG EINER PERSON.
BIOMETRIC AUTHENTIFICATION OF A PERSON.

(30) Priorité: 31.07.2012 FR 1257409
(43) Date de publication de la demande: 10.06.2015
(73) Titulaire: Ionosys, 92330 Sceaux (FR)
(72) Inventeur: BLONDEAU, Stéphane, 92330 Sceaux (FR)
(74) Mandataire: Le Forestier, Eric
(86) Numéro de dépôt international: PCT/EP2013/066132
(87) Numéro de publication internationale: WO 2014/020087

(56) Documents cités:
- EP-A1- 1 914 656
- WO-A1-01/11577
- US-A1- 2003 011 758
- US-A1- 2004 064 728
- US-A1- 2008 148 392
- US-B1- 6 695 207

## Description

### Domaine de l'invention

L'invention concerne l'authentification des personnes par biométrie.

### Etat de l'art

Il existe de nombreux moyens physiques d'identification et d'authentification en vue de réaliser des transactions sécurisées. Par exemple, une carte à puce permet d'authentifier un utilisateur par la saisie d'un code secret par l'utilisateur via un terminal dédié, ce code étant comparé à un code attendu par un protocole sécurisé. Cependant, une telle carte ne permet pas de se prémunir contre une utilisation, typiquement frauduleuse, par une personne autre que son utilisateur authentique si cette personne a pu obtenir le code secret.

Un tel inconvénient peut être compensé en implantant une puce sous-cutanée sous la peau de l'utilisateur. Une telle implantation assure l'authenticité de l'utilisateur. Il s'agit cependant d'une solution particulièrement intrusive en ce qu'elle impose un acte spécialisé et que l'utilisateur ne peut aisément la retirer.

Une autre solution connue consiste à utiliser une donnée biométrique propre à l'utilisateur authentique. Une possibilité est ainsi de réaliser un contrôle biométrique de ladite donnée, par un équipement comprenant un lecteur de cette donnée (par exemple une empreinte digitale) formant une base dédiée, à chaque fois que l'utilisateur désire effectuer une opération. Cependant la sécurité d'un tel système peut être considérée comme limitée. En particulier, en termes de sécurité, l'identification et l'authentification reposent entièrement sur une mesure effectuée par la base. Ainsi, lors de chaque authentification, il est nécessaire de reproduire la mesure biométrique. Par ailleurs, un tel système ne peut procéder à l'authentification de l'utilisateur que sur le fondement de la donnée biométrique particulière (par exemple : empreinte digitale) que la base servant à l'authentification est capable de mesurer.

On connaît enfin par US2004/064728A1 un module d'authentification d'une personne porteuse comprenant un circuit de traitement avec mémoire d'authentification, un capteur d'un paramètre physiologique de la personne porteuse, un moyen d'inactivation du circuit de traitement apte à inactiver celui-ci lorsque le capteur ne reçoit pas un signal physiologique attendu, un circuit de communication sans fil de proximité avec une base pour recevoir des données de ladite base, et des moyens d'émission ou de réception de signaux de validation de présence.

US 6 695 207 B1 divulgue un module en forme de bracelet avec détection de proximité de la personne portant le module et d'ouverture du bracelet, le module effectuant une authentification biométrique de la personne porteuse.

EP 1 914 656 A1 divulgue un module d'authentification fournissant à travers le corps d'une personne portant le module des données biométriques de référence à une base effectuant l'authentification biométrique de la personne.

### Résumé de l'invention

Un but de l'invention est de permettre une identification et une authentification hautement sécurisées tout en offrant une grande souplesse d'utilisation, et une grande facilité d'emploi, et en particulier de s'assurer de façon distincte et fiable que la personne à authentifier est effectivement la personne qui porte le module.

A cet effet, on propose une combinaison telle que définie dans les revendications.

### Brève description des figures

D'autres caractéristiques, buts et avantages de l'invention apparaitront lors de la description ci-après d'un mode de réalisation. Aux dessins annexés :
- la figure 1a représente l'architecture un module d'authentification d'une personne selon un mode de réalisation de l'invention,
- la figure 1b illustre une réalisation physique possible du module de la figure 1a,
- la figure 2a représente un ensemble comprenant un module et un support selon un mode de réalisation de l'invention,
- la figure 2b illustre une réalisation physique possible de l'ensemble de la figure 2a, ainsi que d'une base d'authentification d'une personne,
- la figure 3 représente une architecture pratique d'un ensemble selon un mode de réalisation de l'invention,
- la figure 4 représente une architecture de la base d'authentification d'une personne selon un mode de réalisation de l'invention,
- la figure 5 représente une architecture d'une base d'authentification d'une personne selon un mode de réalisation de l'invention, et
- la figure 6 représente une combinaison d'un module d'authentification et d'une base d'authentification selon un mode de réalisation de l'invention.

### Description détaillée de l'invention

### 1) Exemple d'un module porté

### a) Partie module

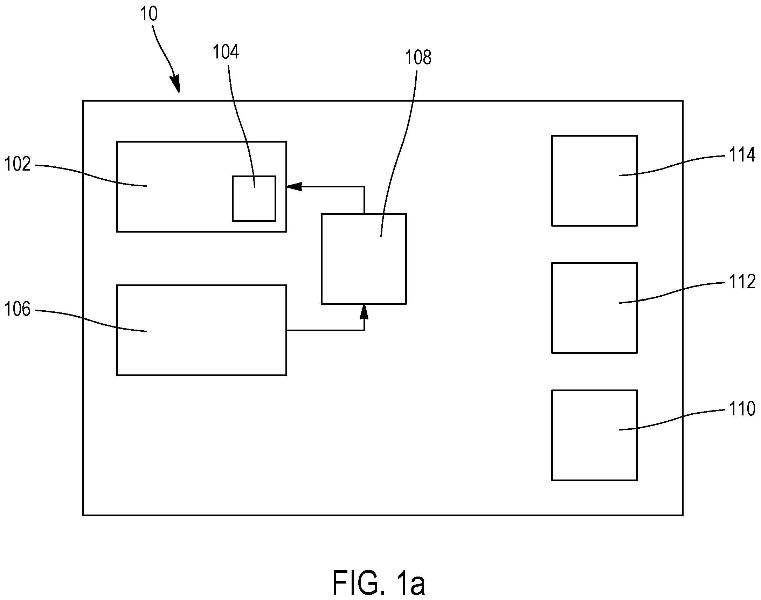

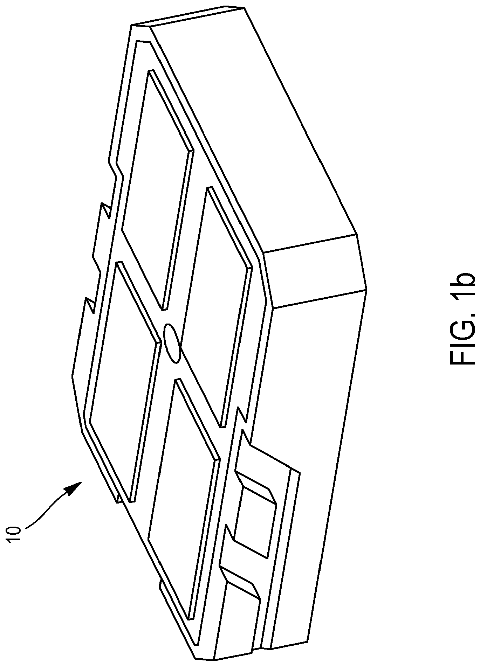

En référence aux figures 1a et 1b, il est décrit un module 10 d'authentification d'une personne.

Ce module 10 est destiné à être porté par un utilisateur, dit « porteur » du module.

Le module 10 comprend un circuit de traitement 102 comprenant une mémoire d'authentification ou mémoire sécurisée 104.

### - Capteur d'un paramètre physiologique

Le module 10 comprend également un capteur 106 d'un paramètre physiologique de l'utilisateur qui porte le module.

Par paramètre physiologique, on entend tout paramètre physiologique mesurable directement sur le porteur.

Lorsque le module est porté par l'utilisateur, le capteur 106 mesure le paramètre physiologique. Cette mesure permettra d'attester que le module 10 est positionné sur le corps du porteur.

Un tel paramètre physiologique peut être un paramètre biométrique, c'est à dire adapté pour permettre une identification du porteur par biométrie telle que connue par l'homme du métier, mais il peut également être un paramètre du porteur ne permettant pas une identification biométrique, en particulier pas une identification univoque ou pas une identification avec un niveau de certitude correspondant à une identification biométrique.

Le paramètre physiologique est par exemple une température corporelle, un rythme cardiaque ou une conductivité de la peau.

### - Moyen d'inactivation

Le capteur 106 est associé à un moyen d'inactivation 108 du circuit de traitement 102 sensible aux informations fournies par le capteur 106 et apte à inactiver le circuit de traitement 102 lorsque ledit capteur 106 ne reçoit pas un signal physiologique attendu. En effet, la mémoire 104, reliée au capteur 106, peut contenir un type ou format d'information biométrique attendu.

Le moyen d'inactivation 108 comprend par exemple un circuit d'inactivation comprenant un microcontrôleur.

L'ensemble formé par la mémoire 104, le capteur 106 et le moyen d'inactivation 108 forme donc un moyen autonome d'authentification du porteur.

Cet ensemble remplit ainsi une première fonction, d'inactivation sélective du module (qui a été par ailleurs initialement activé par tout moyen connu en soi).

Le capteur 106 peut fonctionner de manière continue ou effectuer des mesures à intervalle régulier et/ou à des instants prédéfinis. Alternativement, l'activation du capteur 106 peut être conditionnée à la détection d'un signal d'alerte. Ce signal d'alerte provient par exemple d'un ensemble porté auquel est inclus le module 10. Le signal d'alerte est par exemple un signal de détection d'ouverture d'un bracelet 40 sur lequel est monté le module 10, comme décrit plus en détail ci-après.

### - Circuit de communication sans fil

Le module 10 comprend un circuit de communication 110 sans fil de proximité avec une base 20. Le circuit de communication 110 est apte à communiquer avec ladite base 20 selon un protocole mettant en jeu des données enregistrées dans une mémoire du module (typiquement la mémoire 104).

Cette base 20 est par exemple une base 20 permettant l'activation du module 10. Par activation on entend l'activation initiale du module 10, au cours de laquelle le module 10 peut être personnalisé par enregistrement dans la mémoire des données, ou les activations successives. Au cours de ces activations successives, les données enregistrées sont mises en jeu au moment de l'activation du module.

Ces données sont préférentiellement des données biométriques, mais peuvent comprendre de manière plus générale toutes données liées à l'utilisateur et permettant de l'identifier. Le circuit de communication 110 sans fil, impliquant une communication selon un protocole utilisant des données d'identification, typiquement des données biométriques, forme donc un moyen d'authentification du porteur, ici vis-à-vis de la base 20.

Les données d'identification peuvent être représentatives d'un paramètre biométrique ou d'une pluralité de paramètres biométriques. Les données biométriques sont de précision suffisante pour permettre la mise en oeuvre d'une identification par biométrie telle que connue par l'homme du métier, en particulier avec la certitude propre à de telles mesures selon les connaissances de l'homme du métier.

Ces données biométriques sont préférentiellement distinctes dudit paramètre physiologique mesuré par le capteur 106, c'est-à-dire que les données biométriques sont représentatives d'au moins un paramètre biométrique du porteur, le paramètre étant différent de celui mesuré par le capteur 106.

La distinction se fait donc au niveau du paramètre représenté, et pourra donc impliquer un format différent comme des données en elles-mêmes différentes car représentatives d'un paramètre identifié différent. Par exemple le paramètre physiologique peut être la conductivité cutanée et les données biométriques représentatives de l'iris d'un oeil du porteur ou d'une empreinte digitale.

Les données biométriques peuvent par exemple comprendre des données biométriques représentatives du paramètre physiologique mesuré par le capteur 106, si celui-ci permet une reconnaissance biométrique et des données biométriques représentatives d'un paramètre différent.

Il est ainsi possible d'obtenir une sécurité augmentée en ce que l'authentification peut notamment reposer sur au moins deux paramètres distincts, l'un étant mesuré par le module 10 et étant utilisé par les moyens d'inactivation 108, l'autre étant utilisés par le protocole de communication sans fil.

Les données biométriques distinctes dudit paramètre physiologique mesuré par le capteur 106 peuvent être mesurées par un autre capteur, ou stockées préalablement dans une mémoire du module (mémoire 104 comme mentionné ci-dessus).

Dans le cas où les données biométriques sont préalablement stockées, il est ainsi possible d'utiliser des données comme une image d'un iris ou des réseaux veineux d'une rétine. Ces données pourront être comparées à chaque activation avec des données issues de mesures réalisées par la base 20 lors de cette même activation.

De plus, il est ainsi possible de faire en sorte qu'une activation initiale du module 10 par une base 20 implique une mesure biométrique réalisée par cette base 20 et stockée sous forme de données biométriques dans le module 10 lors de l'activation. L'activation devra ainsi être réalisée au moyen d'une base 20 dédiée, ce qui permettra d'augmenter encore le niveau de sécurité associé à l'utilisation du module 10.

Les données, préférentiellement biométriques, sont mémorisées dans le module 10. Des données relatives au même paramètre biométrique peuvent également être mesurées par la base 20 pour l'activation.

La communication sans fil entre le module et la base peut être réalisée directement entre le module 10 et la base 20, ou encore par l'intermédiaire d'un équipement personnel 30 tel qu'un téléphone. La communication sans fil est par exemple une communication de type NFC ou encore « Bluetooth ».

L'homme du métier saura aisément déterminer les caractéristiques techniques du circuit de communication sans fil de proximité pour permettre au module 10 de communiquer avec la base 20. Ces caractéristiques relèvent du domaine de la communication sans fil par dispositifs électroniques et des protocoles, en particulier des protocoles sécurisés, pouvant être associés à de tels types de communication.

Cette communication permet de vérifier que le module et la base disposent des mêmes données biométriques (ou plus généralement d'identification) et, ainsi, d'authentifier l'utilisateur lors d'une activation.

### - Moyens de validation de présence

Le système formé par la base 20 et le module 10 permet de vérifier que le module 10 est porté par son propriétaire. Par propriétaire du module 10, on entend par exemple la personne dont les données sont stockées dans la mémoire du module 10.

Une personne peut être définie comme le propriétaire du module 20 lors de son activation initiale, notamment en enregistrant les données biométriques de cette personne dans la mémoire du module 10.

Cette validation de présence peut donc être considérée comme une validation d'identité du porteur du module.

Le module 10 comprend ainsi également des moyens d'émission, ou de réception, ou de réception et d'émission, de signaux de validation de présence.

Le module 10 peut comprendre des moyens de validation de présence qui comprennent les moyens d'émission et/ou de réception de signaux de validation de présence. Les moyens de validation de présence peuvent comprendre ou être formés d'un dispositif de validation de présence, par exemple un circuit électronique permettant une telle validation.

Selon une première alternative, le module 10 comprend des moyens d'émission 112 de signaux de validation de présence à destination de ladite base 20.

Selon une deuxième alternative, le module 10 comprend des moyens de réception de signaux de validation de présence. Ainsi, selon cette deuxième alternative, le module 10 comprend des moyens de réception 112 de signaux de validation de présence provenant de ladite base 20.

Ces moyens d'émission ou de réception 112 sont distincts dudit circuit de communication 110.

Par exemple les moyens d'émission ou de réception 112 comprennent un récepteur ou un émetteur qui est indépendant du circuit de communication 110, et peut émettre ou recevoir des signaux indépendamment et/ou séparément du circuit de communication 110.

Les signaux de validation de présence permettent de valider la présence du propriétaire en tant que porteur du module 10.

La validation peut être effectuée par le module 10 et/ou la base 20 et permet de s'assurer que le porteur est bien le propriétaire.

Par validation, on peut ainsi entendre une vérification d'un critère donné, en l'occurrence l'émission et/ou la réception de signaux. Cette vérification d'un critère donné implique par exemple une réponse de validation ou d'invalidation, typiquement sous la forme d'un booléen. Une telle réponse est par exemple fournie suite à une entrée donnée, par exemple à la fourniture d'une valeur d'une variable d'entrée après un temps donné.

Par signal de validation, on entend ainsi un signal dont la réception, l'absence de réception, l'émission, l'absence d'émission, et/ou le contenu, permet(tent) de vérifier un tel critère.

La vérification du critère peut être constatée par un système électronique, par exemple par la base 20 et/ou le module 10, par exemple par des moyens de calcul de la base 20 et/ou du module 10.

Ainsi l'homme du métier saura aisément mettre en oeuvre un signal permettant une validation, dit signal de validation.

En particulier, l'homme du métier saura mettre en oeuvre un signal de validation qui permette une validation de présence du porteur, du propriétaire et/ou du module 10.

Selon un mode de réalisation particulier, sa présence, entendue comme une détection à une certaine distance de la base 20, peut en particulier être entendue comme une détection dans une zone déterminée, par exemple une zone d'authentification.

Il est ainsi possible d'augmenter encore le niveau de sécurité associé au module 10 d'authentification et/ou à la base 20, en s'assurant que seul sera activé le module 10 porté par une personne en étant le propriétaire.

Les signaux de validation de présence permettent donc une validation de l'authentification du porteur.

Les signaux de validation de présence peuvent être des signaux acoustiques ou électriques aptes à être véhiculés par le corps du porteur. Les signaux de validation de présence peuvent être en variante des signaux optiques, par exemple des ondes lumineuses émises par la base 20 pour être reçues par le module 10, ou inversement. Les moyens d'émission ou de réception 112 comprennent typiquement une source de signaux et un récepteur apte à capter et valider de tels signaux.

Ce second moyen d'inactivation est sensible à un moyen de détection de la présence du module sur ou dans un support 40 dudit module 10 sur le corps d'un porteur.

L'homme du métier saura aisément déterminer les caractéristiques techniques pour la mise en oeuvre des moyens d'émission 112 de signaux à destination de ladite base 20 et/ou de réception de signaux provenant de ladite base 20. Ces caractéristiques relèvent du domaine de la communication et du traitement du signal et des protocoles, en particulier des protocoles sécurisés, éventuellement associés.

De même, l'homme du métier saura aisément déterminer les caractéristiques techniques du module 10 pour que le circuit de communication 110 sans fil permette une communication avec une base 20 et que les moyens d'émission 112 et/ou de réception de signal émettent un signal à destination de la même base 20 et/ou reçoivent un signal provenant de la même base 20. L'homme du métier sait déterminer les caractéristiques techniques pour que chacun de ces moyens soient associés à une base 20 et il suffit donc que les caractéristiques techniques respectives de chacun des moyens permettent une communication avec la même base 20.

Par communication avec une même base 20 il faut comprendre qu'il peut s'agir d'une base 20 donnée comme de toute base 20 présentant un certain nombre de caractéristiques déterminées, comme une carte à puce ou à bande magnétique est adaptée pour communiquer avec de multiples terminaux sans pour autant que les informations relatives à chacun de ces terminaux ne soient stockées dans la carte bancaire.

Selon un mode de réalisation, il est ainsi possible de vérifier que la personne authentifiée par ses données biométriques, l'authentification étant permise par le ou les circuit(s) de communication sans fil formant des moyens de communication sans fil, est bien celle qui porte le module 10.

En effet, la mesure du paramètre biométrique des données biométriques peut être choisie et réalisée par la base, et la mesure de validation de présence peut être choisie et réalisée de sorte que la personne s'authentifiant par ses données biométriques soit celle qui tente de valider sa présence. Par exemple, les données biométriques peuvent être une empreinte digitale et la validation de présence une mesure de conductivité par le module suite à l'émission d'un champ électrique par la base de sorte à ce que le champ électrique soit conduit par le doigt présenté pour la mesure d'empreinte digitale par la base.

### b) Ensemble porté

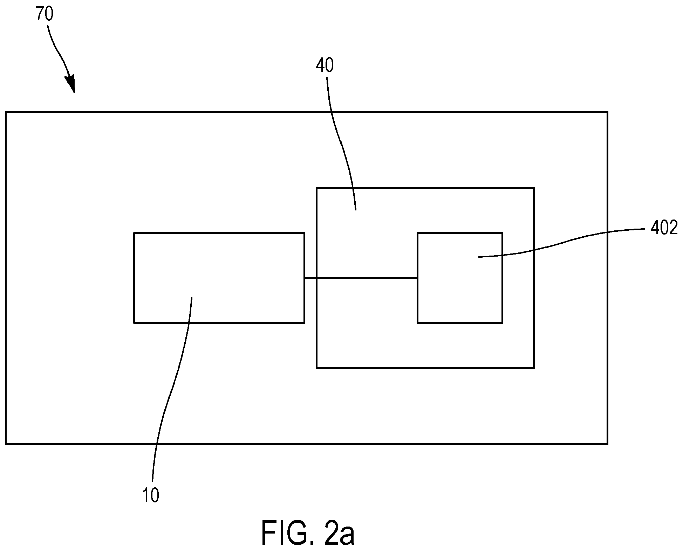

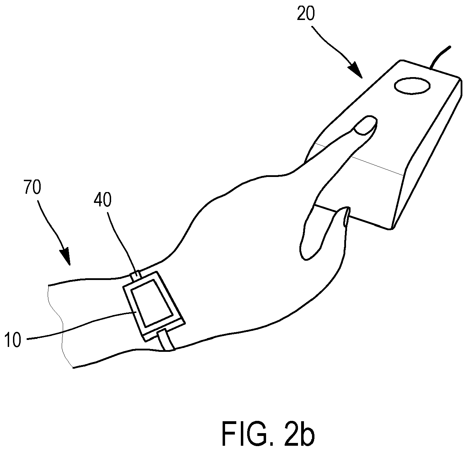

En référence aux figures 2a et 2b, le module peut être inclus dans un ensemble 70 comprenant le module 10 et un support 40 pour ledit module 10.

Le support 40 se présente par exemple sous la forme d'un bracelet apte à être attaché au poignet. Le bracelet 40 peut présenter des moyens 402 connectés au module pour déterminer la fermeture du bracelet 40 sur lui-même. Les moyens de détermination de fermeture 402 peuvent être choisis dans un groupe comprenant les dispositifs de contact électrique et les dispositifs faisant appel à un matériau dont les propriétés électriques varient en fonction de leur déformation, par exemple un élastomère chargé en carbone. Ainsi il est possible de savoir si le bracelet 40 a été retiré et subséquemment désactiver le circuit de traitement 102.

Le bracelet 40 est adapté pour être porté par l'utilisateur ou porteur pour permettre son identification en fonction de données enregistrées au préalable dans la mémoire d'authentification 104.

Le module 10 peut être un boitier d'interface fixé de manière amovible ou non au bracelet 40.

### c) Exemple pratique de l'ensemble

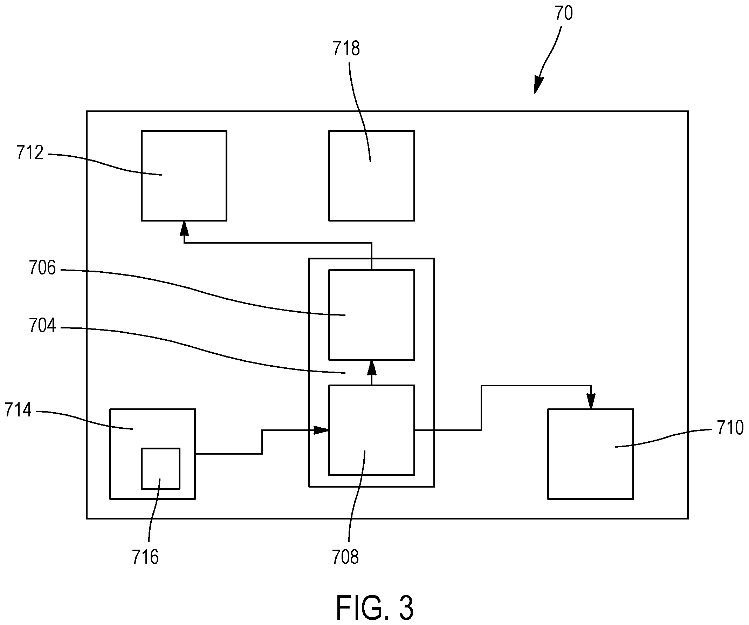

En référence à la figure 3, le bracelet 40 et le module 10 peuvent être réunis dans le même ensemble 70 comprenant un circuit de capteurs 702 qui comprend le capteur 106 et éventuellement le capteur de détection de fermeture 402. Le circuit de capteurs 702 peut également comprendre un circuit électronique d'une validation de présence et d'authentification du porteur.

L'ensemble 70 est animé par une unité centrale 704 comprenant un microcontrôleur basse consommation 706 alimenté et cadencé de façon appropriée et relié au circuit de capteurs 702 comprenant le capteur 106 et éventuellement par le capteur 402 de détection de fermeture.

L'ensemble comprend un étage NFC 710 implémentant le circuit de communication sans fil 110, et optionnellement un étage 712 de communication avec un équipement personnel 30, par exemple via un protocole de communication « Bluetooth ».

L'unité centrale peut comprendre un second microcontrôleur 708 présentant une capacité de traitement et une taille mémoire appropriées pour former le circuit de traitement 102, gérer la sauvegarde de données au niveau de la mémoire d'authentification 104, gérer l'étage de communication sans fil 710, gérer l'étage optionnel 712 de communication dans fil avec un équipement personnel 30, etc.

L'ensemble 70 comprend également de façon optionnelle un étage 714 d'interface avec l'utilisateur comprenant un afficheur 716. L'afficheur 716 peut posséder une fonctionnalité tactile pour permettre une interaction entre le porteur et l'ensemble 70. L'afficheur 716 est par exemple un écran tactile de 1,5" et d'une résolution de 240 dpi. En variante ou en complément, le module possède un ou plusieurs boutons de commande.

L'ensemble 70 comprend par ailleurs un étage alimentation 718 pour l'alimentation du dispositif 7, par exemple par une batterie rechargeable par liaison filaire ou par induction, d'une autonomie appropriée.

### 2) Exemple d'une base

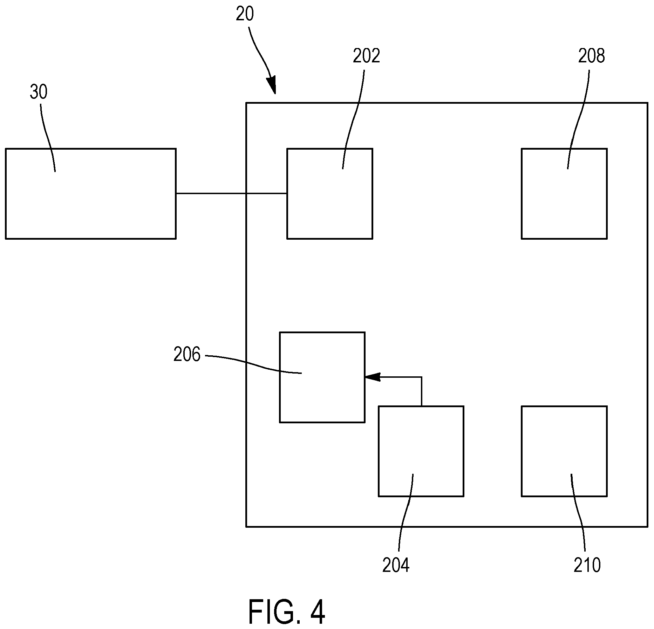

En référence aux figures 2b et 4, il est décrit la base 20 d'authentification apte à coopérer avec le module 10.

La base 20 peut comprendre des moyens d'interfaçage 202 avec un équipement numérique personnel 30. L'équipement numérique personnel 30 est par exemple un assistant numérique personnel, un ordinateur ou un téléphone. Les moyens d'interfaçage 202 peuvent être sans fil ou filaires, par exemple par connexion USB. Les moyens d'interfaçage 202 comprennent un circuit d'interface appartenant à un module d'interface.

La base 20 peut comprendre également un circuit 206 de communication sans fil de proximité avec ledit module 10 répondant à des moyens de commande 204.

Alternativement, un dispositif différent de la base 20, tel que l'équipement numérique personnel 30, peut comprendre le circuit 206 de communication sans fil de proximité avec ledit module 10 en tant que tel, ce dernier étant commandé par les moyens de commande 204 de la base 20.

Ainsi, les moyens de commande 204 peuvent être des moyens de commande 204 adaptés pour permettre une communication sans fil de proximité avec ledit module 10, par exemple des moyens de commande 204 d'un circuit 206 de communication sans fil de proximité avec ledit module 10, ledit circuit 206 étant un circuit de la base 20, ou relié à la base 20, par exemple connecté à la base 20, par exemple un circuit d'un dispositif extérieur, tel qu'un équipement numérique personnel 30 connecté à la base 20, par exemple au moyen d'une connexion filaire.

Les moyens de commande 204 comprennent par exemple un microcontrôleur doté de circuits d'entrée/sortie. La technologie de communication sans fil est par exemple une communication en champ proche, dite NFC (« Near Field Communication » en terminologie anglo-saxonne).

La base 20 comprend en outre des moyens d'acquisition et de mémorisation 208 de données biométriques d'un porteur du module 10. Les moyens d'acquisition et de mémorisation 208 se présentent typiquement sous forme d'un module d'acquisition et de mémorisation comprenant un capteur et des moyens de traitement associés à une mémoire. Les données biométriques sont celles mentionnées plus haut à propos du circuit de communication 110 du module. Les moyens d'acquisition 208 des données biométriques peuvent être mis en jeu avec ou sans contact avec le corps d'un porteur.

Les données biométriques peuvent être par exemple des empreintes digitales ou un réseau veineux palmaire du porteur.

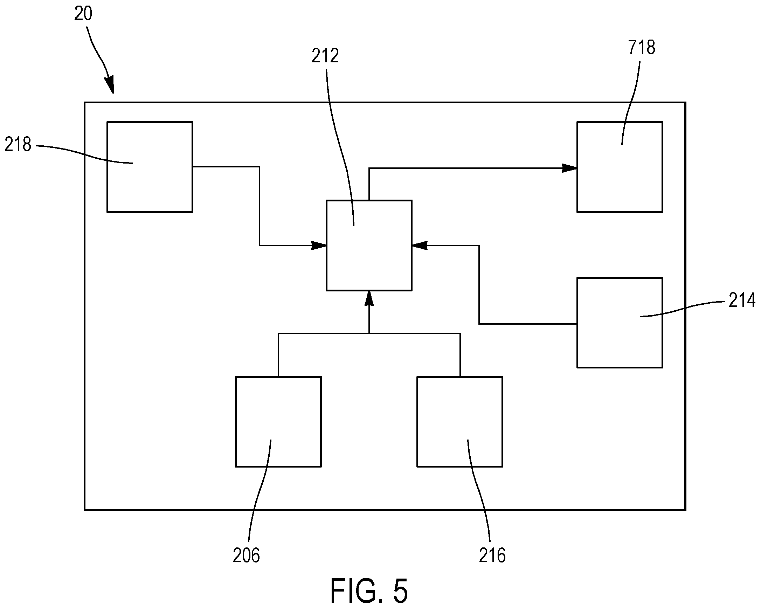

En référence à la figure 5, un exemple d'architecture de la base 20 est décrit. La base 20 comprend un étage microprocesseur 212 qui récupère les données issues des moyens d'acquisition 208. L'étage microprocesseur 212 commande également le circuit de communication sans fil de proximité 206 pour effectuer la communication de données avec le module 10.

La base 20 peut comprendre un étage identification 214 permettant d'identifier le porteur à partir des données biométriques acquises.

La base 20 peut comprendre un étage de conditionnement capteurs 216 effectuant le conditionnement analogique pour acquérir des données biométriques ou pour valider la présence du porteur en comparant les données acquises avec celles provenant du module 10.

La base 20 comprend un étage alimentation 218 pour alimenter les éléments de la base 20.

### 3) Coopération module/base

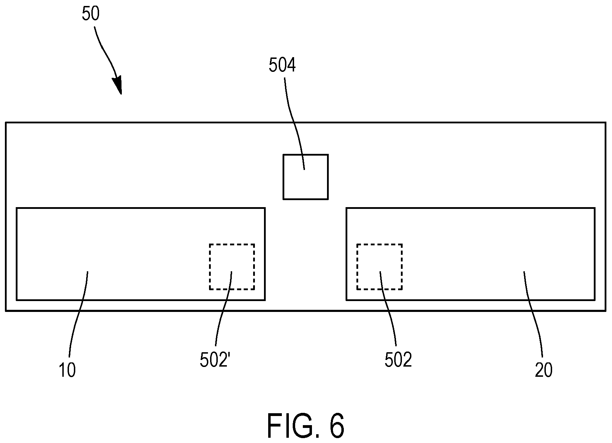

En référence à la figure 6, un module d'authentification 10 et une base d'authentification 20 tels que décrits précédemment peuvent coopérer (ce qui est illustré schématiquement par la référence 50) de manière à autoriser un accès aux données biométriques, en particulier de manière à autoriser le module 10, ou respectivement la base 20 à accéder aux données biométriques, en particulier aux données biométriques de la base 20, ou respectivement du module 10, seulement lorsque qu'une présence du module 10, préférentiellement du module et de son propriétaire, est valablement détectée au niveau de la base (voir description détaillée plus loin).

Les données biométriques de la base 20 peuvent être directement acquises sur le porteur.

Selon un autre mode de réalisation, les données biométriques de la base 20 peuvent être stockées par les moyens d'acquisition et de mémorisation 208 de la base 20, par exemple sur une mémoire de la base 20.

Les données biométriques du module peuvent être stockées sur une mémoire du module 10.

Cette détection s'effectue par un traitement de données 502 au niveau du module et/ou un traitement de données 502' au niveau de la base.

Par valablement détecté, on entend détecté par une validation telle que décrite ci-avant, par exemple par les moyens d'émission 112 de signaux de validation de présence à destination de ladite base 20 et/ou de réception de signaux de validation de présence provenant de ladite base 20.

Cette coopération met en jeu une comparaison 504 des données biométriques acquises par la base avec des données biométriques de référence. Selon un mode de réalisation, cette comparaison est mise en jeu lors d'une activation du module ayant déjà fait l'objet d'une activation initiale.

Des moyens de comparaison 504 peuvent être situés dans le module 10, dans la base 20, et/ou dans un dispositif distinct du module 10 et de la base 20.

Les moyens de comparaison 504 peuvent être situés dans le module 10, les données biométriques acquises par la base 20 étant transmises au module 10 via les circuits de communication 206 sans fil de proximité situés dans la base 20 ou dans l'équipement numérique personnel 30. Alternativement, les moyens de comparaison 504 peuvent être situés dans la base 20, les données biométriques de référence étant mémorisées dans le module 10 et transmises à la base 20 via les circuits de communication 206 sans fil de proximité.

En outre, les moyens de comparaison 504 peuvent être situés dans un dispositif distinct du module 10 et de la base 20, relié au module 10 et/ou à la base 20.

La mémoire d'authentification 104 du module 10 peut être apte à mémoriser des jeux de données d'authentification aptes à être communiqués à ladite base 20 et/ou à l'équipement numérique personnel 30 interfacé via les circuits de communication 206 sans fil de proximité en vue de transactions avec des équipements numériques connectés à ladite base 20.

### 4) Inactivation du circuit de traitement du module

La désactivation du circuit de traitement 102 du module 10 est mise en oeuvre par le moyen d'inactivation 108 du circuit 102 sensible audit capteur 106 et est apte à inactiver le circuit 102 lorsque ledit capteur 106 ne reçoit pas un signal physiologique attendu.

Un tel moyen d'inactivation 108 peut reposer par exemple sur une mesure de conductivité cutanée. La mesure de la conductivité cutanée permet d'estimer l'activité des glandes sudoripares au niveau de la peau. Ainsi, une forte activité de ces glandes sera associée à une conductivité cutanée élevée et une activité basse sera associée à une faible conductivité. La mesure de la conductivité cutanée est réalisée généralement aux extrémités (mains et pieds) car le nombre des glandes sudoripares est plus important dans ces zones. La mesure peut être effectuée à partir de deux électrodes dans lesquelles on injecte un courant de faible amplitude (continue ou alternatif) pour ensuite mesurer la tension générée aux bornes des électrodes. Les électrodes utilisées pour réaliser la mesure peuvent être des électrodes en Ag/AgCl.

Le fait qu'une valeur de conductivité mesurée par le capteur 106 soit inférieure à un seuil déterminé (éventuellement paramétrable) pourra donc signifier une séparation du module 10 et du porteur, le moyen d'inactivation 108 procédant alors à l'inactivation du circuit de traitement 102, empêchant l'utilisation du module 10. Une telle mesure assure une grande fiabilité et une grande sécurité du module 10.

Le moyen d'inactivation 108 peut alternativement reposer sur une mesure de conductivité électrique répartie. La conductivité électrique répartie, mesurée par un capteur piézo-électrique, permet de vérifier que le module 10 se trouve généralement dans une position stable. Si le bracelet 40 est retiré, la conductivité électrique sera modifiée permettant ainsi de détecter une possible ouverture *(mode de réalisation pratique à préciser).*

Le moyen d'inactivation 108 peut également reposer sur une mesure de variation de capacité électrique d'un polymère élastique de l'ensemble 70, par exemple du bracelet 40. Il s'agit ici de mesurer la déformation élastique du matériau du bracelet qui indiquerait le retrait de l'ensemble 70. Le matériau est par exemple un polymère électro-actif. Le polymère électro-actif est un matériau dont la forme ou la taille changent lorsqu'il est placé dans un champ électrique ou qui peut générer une variation de sa résistance ou capacité électrique lorsqu'il est soumis à une variation de sa géométrie. Ainsi, lorsque le matériau est étiré il se produit une variation de sa capacité qui est détectée par un circuit de détection pour réaliser l'inactivation.

Le moyen d'inactivation 108 peut également comprendre des moyens de mesure de variation de résistance électrique, par exemple au niveau d'un capteur contenu dans l'ensemble 70, par exemple du bracelet 40. Il s'agit ici de mesurer la déformation élastique du matériau du bracelet qui indiquerait le retrait de l'ensemble 70. Le capteur est par exemple un capteur de flexion se présentant sous la forme d'une bande dont la résistance varie en fonction du diamètre auquel le capteur est plié. Le capteur est utilement complété par un circuit de détection pour réaliser l'inactivation.

### 5) Association base/module

Il est prévu également selon un mode de réalisation de l'invention des moyens pour vérifier au niveau de la base 20 qu'un module 10 attendu est présent. Ces moyens forment ainsi des moyens de validation de présence de la base 20.

Une première forme de réalisation de ces moyens peut mettre en jeu une mesure de la conductivité cutanée à la fois au niveau du module 10 et de la base 20, les deux signaux étant ensuite comparés soit au niveau de la base 20 (après transmission à la base par les moyens de communication sans fil des signaux relevés au niveau du module), soit au niveau du module 10 (après transmission au module par les moyens de communication sans fil des signaux relevés au niveau de la base).

Alternativement, ces moyens peuvent mettre en oeuvre une mesure de la fréquence cardiaque du porteur par photopléthysmographie. La mesure est réalisée en utilisant une source de lumière et une photodiode. La source de lumière éclaire une zone spécifique du corps du porteur (de préférence au niveau d'un doigt, qui a pour propriété d'être fortement vascularisé), par exemple avec une première diode électroluminescente d'une longueur d'onde de 660 nm et une seconde diode électroluminescente d'une longueur d'onde de 940 nm pour améliorer la performance de la mesure, et les variations du volume de sang produisent une variation dans l'intensité de lumière mesurée par la photodiode. La mesure peut être réalisée au niveau du dispositif 70, par exemple par réflexion de lumière par le sang, et de la base 20, par exemple par transmission, pour permettre ensuite une comparaison avec une référence afin d'obtenir une validation.

Selon un mode de réalisation, la base 20 comprend des moyens d'émission ou de réception 210 de signaux de validation de présence du module 10, distincts du circuit de communication 206. Les signaux de validation de présence à destination dudit module et/ou en provenance dudit module peuvent être typiquement des signaux acoustiques, électriques ou optiques, modulés.

Dans le cas où l'acquisition 208 des données biométriques est mise en oeuvre avec contact avec le corps d'un porteur (cas notamment des empreintes digitales), les signaux sont avantageusement des signaux acoustiques ou électriques véhiculés par le corps du porteur, entre le poignet (zone d'attache de l'ensemble 70) et l'extrémité du doigt. A cet effet, l'ensemble 70 ou la base 20 comporte un transducteur acoustique par exemple de type piézo-électrique ou une électrode pour appliquer à la région du corps avec laquelle il est en contact les des signaux modulés selon un motif de modulation prédéterminé. Ces signaux, après avoir transité via le doigt de l'utilisateur, sont détectés par un capteur correspondant (autre transducteur acoustique ou autre électrode), respectivement prévu dans la base 20 ou dans l'ensemble 70. Si la modulation attendue (qui par ailleurs peut encoder de l'information) est détectée, alors la présence de l'ensemble 70 est validée par la base. Dans le cas où c'est l'ensemble 70 qui reçoit les signaux, le traitement peut être effectué au niveau du module 10 et la validation transmise à la base par le circuit de communication sans fil.

Dans le cas où les moyens d'acquisition 208 des données biométriques sont mis en oeuvre sans contact avec le corps de l'utilisateur (par exemple caméra prenant une image du réseau veineux palmaire), les signaux destinés à permettre la validation de présence du module sont avantageusement des signaux optiques. Ces signaux optiques peuvent être constitués par un signal optique modulé, recueilli par la caméra précité en complément du réseau veineux, ou encore par un motif graphique engendré par exemple sur un écran de type LCD prévu sur le module, ce motif étant capturé en même temps que le réseau veineux pour validation.

Dans tous les cas, si les signaux attendus ne sont pas présents, cela signifie que le module 10 attendu n'est pas présent, et les fonctionnalités d'identification et/ou d'authentification du système de l'invention ne sont pas actives.

### 6) Exemples de fonctionnalités d'identification/authentification

### a) Identification d'un utilisateur autorisé sur un ordinateur en remplacement du login et du mot de passe exigés classiquement par un système d'exploitation

L'utilisateur installe un programme dédié sur le(s) ordinateur(s) sur le(s)quel(s) il souhaite s'identifier.

Il connecte la base 10 via un câble USB (ou par un autre protocole, filaire ou sans fil) à l'ordinateur.

Le programme l'invite à approcher son poignet portant l'ensemble 70 à la base 20, et un fichier crypté est alors chargé dans la mémoire du module 10, ce fichier contenant le login et le mot de passe de l'utilisateur pour cet ordinateur.

Lors de la prochaine utilisation, il suffira à l'utilisateur d'approcher son poignet pourvu de l'ensemble 70 de la base 20 pour réaliser l'ouverture de la session.

Optionnellement, l'utilisateur pourra paramétrer un temps pendant laquelle la session reste ouverte.

### b) Identification par mémorisation des logins et mots de passe de différents sites Internet sécurisés visités à l'aide d'un navigateur

L'utilisateur installe un plugiciel pour son navigateur Internet. Ce plugiciel va charger automatiquement les logins et mots de passe préenregistrés par le navigateur et les stocker de façon cryptée dans la mémoire sécurisée 104 du module 10. L'utilisateur aura ainsi, sur tout ordinateur ayant un navigateur avec ce plugiciel installé, la possibilité d'avoir ses logins et mots de passe pré-remplis automatiquement lors de l'établissement d'une connexion avec ces sites sécurisés, et n'aura simplement qu'à valider par exemple par un clic de souris.

### c) Authentification sur sites internet compatibles

L'utilisateur se rend sur un site internet proposant une applet d'identification compatible avec le système de l'invention.

Lors de sa première connexion, l'utilisateur est invité à saisir ses coordonnées (comme pour un utilisateur classique), mais ne saisit ni login, ni mot de passe. Suite à la validation de l'inscription par l'utilisateur, l'applet charge un fichier crypté dans la mémoire sécurisée 104 du module 10, lui permettant de s'identifier automatiquement à l'aide de l'ensemble 70 qu'il porte lors des prochaines visites sur le site.

Afin de laisser un certain contrôle à l'utilisateur, celui-ci pourra avantageusement, à tout moment, modifier le statut d'une identification parmi les suivants :
- *autorisé toujours* : il suffit à l'utilisateur d'approcher l'ensemble 70 (porté au poignet) de la base 20 pour que l'authentification soit automatiquement réalisée ;
- *autorisé ponctuellement* : l'utilisateur doit présenter son ensemble 70 puis effectuer une validation sur l'interface du module pour que l'authentification soit réalisée ;
- *refusé* : chaque tentative de lecture sera ignorée. L'utilisateur pourra donc accéder seulement à la partie du site ne nécessitant pas d'identification ;
- *révoqué* : Lors d'une tentative de lecture, le module 10 transmet une demande de révocation à l'applet du site Internet qui devra (suivant la réglementation locale) supprimer les données personnelles de l'utilisateur de ses serveurs.

### d) Chargement d'un moyen de paiement ou d'une carte de fidélité à lecture sans contact

L'utilisateur en possession d'un moyen de paiement ou d'une carte de fidélité à lecture sans contact (par exemple une carte bancaire PayPass à lecture selon la technologie NFC) peut transférer ce moyen de paiement vers le module 10.

A cet effet, il installe une application dédiée sur son ordinateur et saisit les données d'identification liées à cette carte de paiement. Il doit également mettre successivement la carte puis son module 10 (porté par le poignet) à portée du lecteur NFC de la base 20. Le programme après ces vérifications charge les données de la carte de paiement dans la mémoire sécurisée du module 10.

Ensuite, lorsque l'utilisateur souhaite effectuer un paiement, il approche l'ensemble 70 porté à son poignet d'un terminal de paiement NFC pour réaliser la transaction, avec par exemple un débit automatique pour un petit paiement) ou la nécessité de valider la transaction via l'interface du module 10 (bouton ou écran tactile) pour un paiement plus important.

Naturellement, toutes les fonctionnalités sont inactivées (inactivation de l'unité centrale 102) lorsque l'ensemble module/bracelet n'est pas porté par l'utilisateur et, lorsque la base 20 est mise en jeu, lorsque l'association module/base n'est pas réalisée (voir plus haut).

### 7) Utilisation

### a) Mise en service

Pour la mise en service du système, l'utilisateur est invité à placer le module dans le bracelet (sauf s'ils forment déjà un tout - ensemble 70 - au départ) et à placer l'ensemble sur son poignet.

Le module est mis en service et détecte le cas échéant des paramètres physiologiques correspondant au poignet de l'utilisateur (température, rythme cardiaque, conductivité de la peau) et se place en mode d'initialisation.

En parallèle, la base est connectée à une alimentation électrique.

Selon un mode de réalisation, l'utilisateur, en positionnant son doigt sur la base 20, déclenche alors une émission du signal de validation de présence, tel qu'un signal modulé transitant par la peau entre le doigt et le poignet, via un émetteur de la base 20 sur lequel le doigt de l'utilisateur est placé et via le capteur du module 10, lui-même placé au niveau du poignet de l'utilisateur. La comparaison des signaux émis et mesuré, lorsqu'elle résulte en une correspondance entre les signaux, déclenche la lecture de son empreinte digitale ou de son réseau veineux, et l'image numérique correspondante est transmise au module via les circuits de communication sans fil pour y être mémorisée. Le module 10 passe alors à l'état actif.

### b) Mise en veille et réactivation

La mise en veille ou en mode inactif du module 10 par l'utilisateur est effectuée par simple retrait de l'ensemble 70, pour la nuit par exemple. Ceci suppose la possibilité de le réactiver. L'utilisateur utilise pour cela la base 20. Il met l'ensemble à son poignet et provoque une émission du signal de validation de présence et une mesure de ce signal, une comparaison des signaux émis et mesuré, puis en cas de correspondance, une lecture de son empreinte digitale sur la base 20. Celle-ci est envoyée au module 10 via les circuits de communication sans fil. S'il y a correspondance avec le profil d'empreinte digitale mémorisé, le module 10 passe en mode actif. Sinon, il ne se passe rien.

### c) Sauvegarde de données

En cas de perte, de vol ou de dysfonctionnement du module 10, l'utilisateur doit pouvoir continuer à accéder aux services.

A cet effet, la base 20 dispose d'un lecteur d'unité de mémoire (sous forme par exemple d'une clé USB). A chaque nouvelle réactivation, les données contenues dans la mémoire sécurisée du module 10 sont sauvegardées sous forme cryptée dans cette unité de mémoire (y compris le profil d'empreinte digitale associé). L'utilisateur peut réaliser autant de sauvegardes qu'il le souhaite (par autant de réactivations). Pour récupérer ces données, il suffit à l'utilisateur d'initialiser un module neuf 10 avec son empreinte digitale. S'il y a correspondance avec le profil d'empreinte digitale stocké dans l'unité de mémoire, les données contenues dans cette unité sont décryptées et transférées vers la mémoire sécurisée du module neuf. L'utilisateur peut à nouveau utiliser les services.

### d) Utilisations frauduleuses

Afin d'éviter une utilisation frauduleuse d'un module 10 perdu ou volé, suite à cette restauration des services, chaque identité en mémoire est étiquetée comme étant une identité « récupérée ». Lors d'une identification, l'applet du site Internet visité sera informée de ce statut. Elle pourra alors fournir une nouvelle identité pour mémorisation dans la mémoire sécurisée du module, et révoquer l'ancienne identité.

Cette fonctionnalité n'est naturellement possible qu'avec les identifications faites sur les sites avec l'applet compatible. Pour les autres identifiants mémorisés, l'utilisateur pourra disposer le cas échéant d'un logiciel lui permettant d'être assisté pour aller remplacer manuellement ses mots de passe corrompus.

En cas de perte, de vol ou de dysfonctionnement de la base, celle-ci peut être remplacée par une base neuve sans difficulté, pour ce qui concerne en tout cas la forme de réalisation où elle ne contient aucune donnée

### 8) Variantes de paramètres biologiques/biométriques

En rappel des possibilités décrites plus haut ainsi qu'en complément, le système peut mettre en jeu une ou plusieurs des mesures suivantes :
- conductivité de la peau : la conductivité est mesurée à intervalle régulier. Une discontinuité est considérée comme une anomalie ;
- température et proximité : un capteur infrarouge mesure à intervalles réguliers la proximité et la température de l'utilisateur. Une discontinuité sera identifiée également comme une anomalie ;
- rythme cardiaque : un capteur mesure le rythme cardiaque de l'utilisateur. Une perte de l'information sera perçue comme une anomalie.

Par ailleurs, afin d'éviter les faux positifs, un programme peut être mis en oeuvre pour contrôler la coïncidence de deux ou plus de ces anomalies pour indiquer au contrôleur 102 s'il doit passer en mode inactif.

### 9) Mode de réalisation alternatif

### a) Moyens de réception de signaux de validation du module

Selon un autre mode de réalisation, le module 10 d'authentification d'une personne peut comprendre, alternativement ou en complément des moyens d'émission et/ou de réception de signaux de validation de présence décrits précédemment, des moyens formant des deuxièmes moyens de réception de signaux de validation de présence provenant du corps du porteur.

En particulier, le module 10 peut être configuré de sorte que les moyens de validation de présence peuvent comprendre ces deuxièmes moyens de réception de signaux de validation de présence provenant du corps du porteur.

Les deuxièmes moyens de réception de signaux de validation de présence peuvent être configurés de sorte que les signaux de validation de présence sont distincts des signaux émis et/ou reçu par le circuit de communication sans fil lors de sa communication avec la base selon un protocole mettant en jeu des données biométriques.

Ces deuxièmes moyens de réception de signaux de présence peuvent ainsi être distincts dudit circuit de communication 110.

### b) Moyens de réception de signaux de validation de présence de la base

Par ailleurs, la base 20 peut également comprendre, alternativement ou en complément des moyens d'émission de signaux de validation de présence à destination dudit module et/ou de réception de signaux de validation décrits précédemment, des deuxièmes moyens de réception de signaux de validation de présence provenant du corps du porteur.

En particulier, la base 20 peut être configurée de sorte que les moyens de validation de présence peuvent comprendre ces deuxièmes moyens de réception de signaux de validation de présence provenant du corps du porteur.

Les deuxièmes moyens de réception de signaux de validation de présence peuvent être configurés de sorte que les signaux de validation de présence sont distincts des signaux émis et/ou reçu par le circuit de communication 206 sans fil lors de sa communication avec le module 10 selon un protocole mettant en jeu des données biométriques.

Ces deuxièmes moyens de réception de signaux de présence peuvent ainsi être distincts dudit circuit de communication 110.

Les deuxièmes moyens de réception de signaux de validation de présence du module 10 et/ou de la base 20 peuvent par exemple comprendre ou être formés chacun d'un capteur de signaux de validation de présence, par exemple un capteur d'un signal physiologique du porteur.

### c) Moyens de comparaison des signaux

Les moyens de validation de présence du module 10 et/ou de la base 20 peuvent comprendre des moyens de comparaison des signaux, pour permettre de valider la présence du porteur et/ou du module 10 à proximité de la base 20.

En effet, le module 10 et la base 20 peuvent par leurs deuxièmes moyens de réception, recevoir des signaux. Ces signaux peuvent ensuite être comparés par les moyens de comparaison pour valider la présence du porteur et du module 10 à proximité de la base 20.

Si les signaux sont identiques, ou suffisamment proches, on peut ainsi considérer que la personne est bien celle portant le module 10, et permettre l'accès à la base 20 ou l'activation du module 10 par la base 20.

Selon un mode de réalisation, la personne en question est la personne dont les données biométriques correspondent aux données biométriques enregistrées sur la mémoire du module 10, une telle comparaison ayant été permise par le ou les circuit(s) de communication sans fil.

Selon ce mode de réalisation, il est ainsi possible de vérifier que la personne authentifiée par ses données biométriques, l'authentification étant permise par le ou les circuit(s) de communication sans fil formant des moyens de communication sans fil, est bien celle qui porte le module 10.

En effet, la mesure du paramètre biométrique des données biométriques peut être choisie et réalisée par la base, et la mesure de validation de présence peut être choisie et réalisée de sorte que la personne s'authentifiant par ses données biométriques soit celle qui tente de valider sa présence.

Par exemple, les données biométriques peuvent être une empreinte digitale et la validation de présence une mesure de rythme cardiaque par le module et la base simultanément pour comparaison, de sorte à ce que le rythme cardiaque soit mesuré par la base au niveau du doigt présenté pour la mesure d'empreinte digitale par la base.

Selon un mode de réalisation particulier, la personne en question est une personne proche de la base 20.

Par exemple, les signaux reçus par le module 10 peuvent être transmis au module 20, ou inversement. La transmission peut être réalisée au moyen de la communication sans fil décrite précédemment, par exemple selon le protocole mettant en jeu des données biométrique ou selon un protocole différent.

Les moyens de comparaison de signaux peuvent par exemple comprendre ou être formés d'un dispositif de comparaison de signaux, par exemple d'un circuit électronique permettant une telle comparaison.

### d) Moyens de contrôle de la nature des signaux

Les moyens de validation de présence du module 10 et/ou de la base 20 peuvent comprendre des moyens de contrôle de la nature des signaux reçus par les deuxièmes moyens de réception de signaux de validation de présence du module 10 et/ou de la base 20.

Avant ou après la comparaison des signaux, les signaux obtenus à partir de mesures réalisées simultanément par les deuxièmes moyens de réception de signaux de validation de présence du module 10 et de la base 20 peuvent être soumis à une étape de contrôle de sorte à vérifier qu'ils correspondent bien à un signal de validation de présence du porteur.

Par exemple, le signal attendu peut être le pouls du porteur et les moyens de validation de présence du module 10 et/ou de la base peuvent vérifier que les mesures réalisées correspondent bien à un pouls.

Selon un autre exemple, une mesure de la conductivité cutanée peut être réalisée à la fois au niveau du module 10 et de la base 20 par les deuxièmes moyens de validation de présence, les deux signaux étant ensuite comparés soit au niveau de la base 20, après transmission à la base par exemple par le circuit de communication sans fil formant moyens de communication sans fil des signaux relevés au niveau du module, soit au niveau du module 10, après transmission au module par exemple par le circuit de communication sans fil formant moyens de communication sans fil des signaux relevés au niveau de la base.

Il est ainsi possible en particulier d'éviter que des signaux correspondant à un module qui ne serait pas au contact d'un porteur et à une base au niveau de laquelle un porteur ne s'est pas présenté, par exemple des signaux nuls identiques, ne soient comparés et/ou ne permettent de valider de manière erronées la présence d'un porteur.

Les moyens de contrôle de la nature des signaux reçus peuvent par exemple comprendre ou être formés d'un dispositif de contrôle de la nature des signaux reçus, par exemple d'un circuit électronique permettant un tel contrôle.

Bien entendu, la présente invention n'est nullement limitée aux formes de réalisation décrites et représentées, et l'homme du métier saura y apporter avec ses connaissances générales de nombreuses variantes et modifications.

## Revendications

1. Combinaison d'un ensemble d'un module (10) d'authentification d'une personne porteuse et d'un support du module, en forme de bracelet (40), et d'une base (20), la combinaison comprenant les caractéristiques suivantes :
- un circuit de traitement (102) prévu dans le module et comprenant une mémoire d'authentification (104),
- des moyens (402) connectés au module (10) pour détecter l'ouverture du bracelet (40),
- un moyen d'inactivation (108) du circuit de traitement (102) lorsque les moyens de détection d'ouverture détectent une ouverture du bracelet, ce moyen étant prévu dans le module.
- un capteur (106) d'un paramètre physiologique de la personne porteuse prévu dans le module,
- un capteur du même paramètre physiologique prévu dans la base,
- des moyens d'acquisition et de mémorisation (208) de données biométriques d'une personne porteuse du module (10), distinctes dudit paramètre physiologique, ces moyens étant prévus dans la base,
- des moyens de comparaison (504) des données biométriques acquises par la base (20) avec des données biométriques de référence contenues dans la mémoire d'authentification,
- des circuits de communication (110) sans fil de proximité prévus dans le module et dans la base (20) et commandés par des moyens de commande, aptes à permettre au module et à la base de communiquer selon un protocole permettant d'émettre ou de recevoir les données biométriques,
- des moyens de validation de présence de la personne porteuse basés sur des signaux de validation de présence constitués par le paramètre physiologique fourni par ledit capteur du module et fourni par le capteur de la base, aptes à autoriser le module ou la base à accéder aux données biométriques seulement en cas de validation, et
- des moyens (202) d'interfaçage de la base (20) avec un équipement numérique personnel.

2. Combinaison selon la revendication 1, dans lequel les signaux de validation de présence comprennent un signal de température corporelle ou un signal de rythme cardiaque ou un signal de conductivité de la peau.

3. Combinaison selon la revendication 1 ou 2, dans laquelle les données biométriques sont des données d'empreintes digitales.

4. Combinaison selon la revendication 1 ou 2, dans laquelle les données biométriques sont des données de réseau veineux, notamment réseau veineux palmaire.

5. Combinaison selon l'une des revendications 1 à 4, comprenant en outre des moyens (502) pour autoriser le module (10) ou la base (20) à accéder aux données biométriques seulement lorsque des signaux de validation de présence émis par ledit module (10) sont valablement détectés par ladite base (20).

6. Combinaison selon l'une des revendications 1 à 4, comprenant en outre des moyens (502') pour autoriser le module (10) ou la base (20) à accéder aux données biométriques seulement lorsque des signaux de validations de présence émis par ladite base (20) sont valablement détectés par ledit module (10).

7. Combinaison selon l'une des revendications 1 à 6, dans laquelle les moyens de comparaison (504) sont situés dans le module (10), les données biométriques acquises par la base (20) étant transmises au module (10) via les circuits de communication (206) sans fil de proximité.

8. Combinaison selon l'une des revendications 1 à 6, dans laquelle les moyens de comparaison (504) sont situés dans la base (20), les données biométriques de référence étant transmises à la base (20) via les circuits de communication (206) sans fil de proximité.

9. Combinaison selon l'une des revendications 1 à 8, dans laquelle la mémoire d'authentification (104) du module (10) est apte à mémoriser des jeux de données d'authentification aptes à être communiquées à ladite base (20) via les circuits de communication (206) sans fil de proximité en vue de transactions avec des équipements numériques connectés à ladite base (20).

10. Combinaison d'un ensemble d'un module (10) d'authentification d'une personne porteuse et d'un support du module, en forme de bracelet (40), et d'une base (20), la combinaison comprenant les caractéristiques suivantes :
- un circuit de traitement (102) prévu dans le module et comprenant une mémoire d'authentification (104),
- un capteur (106) d'un paramètre physiologique de la personne porteuse, prévu dans le module,
- un moyen d'inactivation (108) du circuit (102) sensible audit capteur (106) et apte à inactiver le circuit (102) lorsque ledit capteur (106) ne reçoit pas un signal physiologique attendu, ce moyen étant prévu dans le module,
- des moyens d'acquisition et de mémorisation (208) de données biométriques d'une personne porteuse du module (10), distinctes dudit paramètre physiologique, ces moyens étant prévus dans la base,
- des moyens de comparaison (504) des données biométriques acquises par la base (20) avec des données biométriques de référence contenues dans la mémoire d'authentification,
- des circuits de communication (110) sans fil de proximité prévus dans le module et dans la base (20) et commandés par des moyens de commande, aptes à permettre au module et à la base de communiquer selon un protocole permettant d'émettre ou de recevoir les données biométriques,
- des moyens de validation de présence de la personne porteuse basés sur des signaux de validation de présence émis par le module à destination de la base ou émis par la base à destination du module de façon distincte desdits circuits de communication (110), aptes à autoriser le module ou la base à accéder aux données biométriques seulement en cas de validation, et
- des moyens (202) d'interfaçage de la base (20) avec un équipement numérique personnel.

11. Combinaison selon la revendication 10, dans laquelle lesdits signaux de validation sont des signaux acoustiques aptes à être véhiculés par le corps du porteur, ou des signaux électriques aptes à être véhiculés par le corps du porteur, ou des signaux optiques.

12. Combinaison selon la revendication 11, dans laquelle les moyens d'acquisition (208) des données biométriques mettent en jeu un contact avec le corps d'un porteur, et les signaux de validation de présence à destination dudit module et/ou provenant dudit module (10) sont des signaux acoustiques ou électriques.

13. Combinaison selon la revendication 12, dans laquelle les données biométriques sont des données d'empreintes digitales.

14. Combinaison selon la revendication 11, dans laquelle les moyens d'acquisition (208) des données biométriques sont mis en oeuvre sans contact avec le corps d'un porteur, et dans laquelle les moyens (210) d'émission et/ou de réception de signaux de validation de présence comprennent des moyens d'émission et/ou de détection de signaux optiques.

15. Combinaison selon la revendication 14, dans laquelle les signaux optiques comprennent un signal optique modulé et/ou un motif graphique.

## Patentansprüche

1. Kombination aus einer Einheit aus einem Modul (10) zur Authentifizierung einer Trägerperson und eines Trägers des Moduls in Form eines Armbands (40) und aus einer Basis (20), wobei die Kombination die folgenden Merkmale umfasst:
- eine Verarbeitungsschaltung (102), die in dem Modul vorgesehen ist und einen Authentifizierungsspeicher (104) umfasst,
- Mittel (402), die an das Modul (10) angeschlossen sind, um das Öffnen des Armbands (40) zu erfassen,
- ein Mittel zum Deaktivieren (108) der Verarbeitungsschaltung (102), wenn die Mittel zum Erfassen des Öffnens ein Öffnen des Armbands erfassen, wobei dieses Mittel in dem Modul vorgesehen ist,
- einen Sensor (106) eines physiologischen Parameters der Trägerperson, der in dem Modul vorgesehen ist,
- einen Sensor für denselben physiologischen Parameter, der in der Basis vorgesehen ist,
- Mittel zum Erfassen und Speichern (208) biometrischer Daten einer Trägerperson des Moduls (10), die von dem physiologischen Parameter getrennt sind, wobei diese Mittel in der Basis vorgesehen sind,
- Mittel zum Vergleichen (504) biometrischer Daten, die von der Basis (20) erfasst wurden, mit biometrischen Referenzdaten, die in dem Authentifizierungsspeicher enthalten sind,
- Schaltungen zur drahtlosen Proximitätskommunikation (110), die in dem Modul und in der Basis (20) vorgesehen sind und durch Steuermittel gesteuert werden, die geeignet sind, es dem Modul und der Basis zu erlauben, gemäß einem Protokoll zu kommunizieren, das es erlaubt, biometrische Daten zu senden oder zu empfangen,
- Mittel zum Bestätigen der Anwesenheit der Trägerperson, die auf Anwesenheitsbestätigungssignalen beruhen, die aus dem physiologischen Parameter, der von dem Sensor des Moduls geliefert wird, und von dem Sensor der Basis geliefert wird, bestehen, die geeignet sind, dem Modul oder der Basis zu gestatten, auf die biometrischen Daten nur im Fall der Bestätigung zuzugreifen, und
- Mittel (202) zur Anbindung der Basis (20) an eine persönliche digitale Ausstattung.

2. Kombination nach Anspruch 1, wobei die Anwesenheitsbestätigungssignale ein Körpertemperatursignal oder ein Herzrhythmussignal oder ein Leitfähigkeitssignal der Haut umfassen.

3. Kombination nach Anspruch 1 oder 2, wobei die biometrischen Daten digitale Fingerabdruckdaten sind.

4. Kombination nach Anspruch 1 oder 2, wobei die biometrischen Daten Venennetzdaten, insbesondere des Handflächenvenennetzes, sind.

5. Kombination nach einem der Ansprüche 1 bis 4, die außerdem Mittel (502) umfasst, um dem Modul (10) oder der Basis (20) zu gestatten, auf die biometrischen Daten nur zuzugreifen, wenn Anwesenheitsbestätigungssignale , die von dem Modul (10) gesendet werden, von der Basis (20) gültig erfasst werden.

6. Kombination nach einem der Ansprüche 1 bis 4, die ferner Mittel (502') aufweist, um dem Modul (10) oder der Basis (20) nur zu gestatten, auf die biometrischen Daten zuzugreifen, wenn Anwesenheitsbestätigungssignale, die von der Basis (20) gesendet werden, von dem Modul (10) gültig erfasst werden.

7. Kombination nach einem der Ansprüche 1 bis 6, wobei sich die Vergleichsmittel (504) in dem Modul (10) befinden, wobei die biometrischen Daten, die von der Basis (20) erfasst werden, an das Modul (10) über die drahtlosen Proximitätskommunikationsschaltungen (206) übertragen werden.

8. Kombination nach einem der Ansprüche 1 bis 6, wobei sich die Vergleichsmittel (504) in der Basis (20) befinden, wobei die biometrischen Referenzdaten an die Basis (20) über die drahtlosen Proximitätskommunikationsschaltungen (206) übertragen werden.

9. Kombination nach einem der Ansprüche 1 bis 8, wobei der Authentifizierungsspeicher (104) des Moduls (10) geeignet ist, um Authentifizierungsdatensätze zu speichern, die geeignet sind, um zu der Basis (20) über die drahtlosen Proximitätskommunikationsschaltungen (206) für Transaktionen mit digitalen Ausstattungen, die mit der Basis (20) verbunden sind, kommuniziert zu werden.

10. Kombination aus einer Einheit aus einem Modul (10) zur Authentifizierung einer Trägerperson und eines Trägers des Moduls in Form eines Armbands (40) und aus einer Basis (20), wobei die Kombination die folgenden Merkmale umfasst:
- eine Verarbeitungsschaltung (102), die in dem Modul vorgesehen ist und einen Authentifizierungsspeicher (104) umfasst,
- einen Sensor (106) eines physiologischen Parameters der Trägerperson, der in dem Modul vorgesehen ist,
ein Deaktivierungsmittel (108) der Schaltung (102), das auf den Sensor (106) reagiert und geeignet ist, die Schaltung (102) zu deaktivieren, wenn der Sensor (106) kein erwartetes physiologisches Signal empfängt, wobei dieses Mittel in dem Modul vorgesehen ist,
- Mittel zum Erfassen und Speichern (208) biometrischer Daten einer Trägerperson des Moduls (10), die von dem physiologischen Parameter getrennt sind, wobei diese Mittel in der Basis vorgesehen sind,
- Mittel zum Vergleichen (504) der biometrischen Daten, die von der Basis (20) erfasst wurden, mit biometrischen Referenzdaten, die in dem Authentifizierungsspeicher enthalten sind,
- Schaltungen zur drahtlosen Proximitätskommunikation (110), die in dem Modul und in der Basis (20) vorgesehen sind und durch Steuermittel gesteuert werden, die geeignet sind, es dem Modul und der Basis zu erlauben, gemäß einem Protokoll zu kommunizieren, das es erlaubt, biometrische Daten zu senden oder zu empfangen,
- Mittel zur Bestätigung der Anwesenheit der Trägerperson, die auf Anwesenheitsbestätigungssignalen, die von dem Modul zu der Basis oder von der Basis zu dem Modul getrennt von den Kommunikationsschaltungen (110) gesendet werden, die geeignet sind, um dem Modul oder der Basis zu gestatten, auf die biometrischen Daten nur im Fall der Bestätigung zuzugreifen, und
- Mittel (202) zur Anbindung der Basis (20) an eine persönliche digitale Ausstattung.

11. Kombination nach Anspruch 10, wobei die Anwesenheitsbestätigungssignale akustische Signale sind, die geeignet sind, von dem Körper der Trägerperson transportiert zu werden, oder elektrische Signale, die geeignet sind, von dem Körper der Trägerperson transportiert zu werden, oder optische Signale.

12. Kombination nach Anspruch 11, wobei die Erfassungsmittel (208) der biometrischen Daten einen Kontakt mit dem Körper einer Trägerperson einsetzen, und wobei die Anwesenheitsbestätigungssignale zu dem Modul und / oder von dem Modul (10) akustische oder elektrische Signale sind.

13. Kombination nach Anspruch 12, wobei die biometrischen Daten digitale Fingerabdruckdaten sind.

14. Kombination nach Anspruch 11, wobei die Erfassungsmittel (208) biometrischer Daten ohne Berührung mit dem Körper einer Trägerperson umgesetzt werden, und wobei die Mittel (210) zum Senden und / oder Empfangen von Anwesenheitsbetätigungssignalen Mittel zum Senden und / oder Erfassen optischer Signale umfassen.

15. Kombination nach Anspruch 14, wobei die optischen Signale ein moduliertes optisches Signal und / oder ein graphisches Muster umfassen.

## Claims

1. A combination of an assembly of a module (10) for authenticating a wearer and a support for the module, in the form of a strap (40), and a base (20), the combination comprising the following features:
- a processing circuit (102) provided in the module and comprising an authentication memory (104),
- means (402) connected to the module (10) for detecting the opening of the strap (40),
- a means (108) for inactivating the processing circuit (102) when the opening detection means detect an opening of the strap, this means being provided in the module,
- a sensor (106) of a physiological parameter of the wearer provided in the module,
- a sensor of the same physiological parameter provided in the base,
- means (208) for acquiring and storing biometric data of a wearer of the module (10), distinct from said physiological parameter, these means being provided in the base,
- means (504) for comparing the biometric data acquired by the base (20) with reference biometric data contained in the authentication memory,
- circuits (110) for wireless nearfield communications provided in the module and in the base (20) and controlled by controlling means, capable of allowing the module and the base to communicate according to a protocol allowing to transmit or receive the biometric data,
- means for validating the presence of the wearer based on presence validation signals constituted by the physiological parameter provided by said sensor of the module and provided by the sensor of the base, capable of authorizing the module or the base to access the biometric data only in case of validation, and
- means (202) for interfacing the base (20) with a personal digital device.

2. A combination according to claim 1, wherein the presence validation signals comprise a body temperature signal or a heart rate signal or a skin conductivity signal.

3. A combination according to claim 1 or 2, wherein the biometric data are fingerprint data.

4. A combination according to claim 1 or 2, wherein the biometric data are venous network data, in particular palmar venous network data.

5. A combination according to any one of claims 1 to 4, further comprising means (502) for authorizing the module (10) or the base (20) to access the biometric data only when presence validation signals transmitted by said module (10) are validly detected by said base (20).

6. A combination according to any one of claims 1 to 4, further comprising means (502') for authorizing the module (10) or the base (20) to access the biometric data only when presence validation signals transmitted by said base (20) are validly detected by said module (10).

7. A combination according to any one of claims 1 to 6, wherein the comparison means (504) are located in the module, the biometric data acquired by the base (20) being transmitted to the module (10) via the wireless nearfield communication circuits (206).

8. A combination according to any one of claims 1 to 6, wherein the comparison means (504) are located in the base, the reference biometric data being transmitted to the base (20) via the wireless nearfield communication circuits (206).

9. A combination according to any one of claims 1 to 8, wherein the authentication memory (104) of module (10) is capable of storing authentication data sets capable of being communicated to said base (20) via the wireless nearfield communication circuits (206) for the purpose of transactions with digital devices connected to said base (20).

10. A combination of an assembly of a module (10) for authenticating a wearer and a support for the module, in the form of a strap (40), and a base (20), the combination comprising the following features:
- a processing circuit (102) provided in the module and comprising an authentication memory (104),
- a sensor (106) of a physiological parameter of the wearer, provided in the module,
- a means (108) for inactivating the circuit (102) responsive to said sensor (106) and capable of inactivating the circuit (102) when said sensor does not receive an expected physiological signal, this means being provided in the module,
- means (208) for acquiring and storing biometric data of a wearer of the module (10), distinct from said physiological parameter, these means being provided in the base,
- means (504) for comparing the biometric data acquired by the base (20) with reference biometric data contained in the authentication memory,
- circuits (110) for wireless nearfield communications provided in the module and in the base (20) and controlled by controlling means, capable of allowing the module and the base to communicate according to a protocol allowing to transmit or receive the biometric data,
- means for validating the presence of the wearer based on the presence validation signals transmitted by the module to the base or transmitted by the base to the module in a manner distinct from said communication circuits (110), capable of authorizing the module or the base to access the biometric data only in case of validation, and
- means (202) for interfacing the base (20) with a personal digital device.

11. A combination according to claim 10, wherein the validation signals are acoustic signals capable of being conducted by the wearer's body, or electric signals capable of being conducted by the wearer's body, or optical signals.

12. A combination according to claim 11, wherein the biometric data acquisition means (208) involve a contact with a wearer's body, and the presence validation signals intended to said module and/or originating from said module (10) are acoustic or electrical signals.

13. A combination according to claim 12, wherein the biometric data are fingerprint data.

14. A combination according to claim 11, wherein the biometric data acquisition means (208) operate contactless with a wearer's body, and wherein the means (210) for transmitting and/or receiving presence validation signals comprise means for transmitting and/or detecting optical signals.

15. A combination according to claim 14, wherein the optical signals comprise a modulated optical signal and/or a graphic pattern.
